# EUROPEAN PATENT APPLICATION

(11) **EP 2 824 067 A1**
(43) Date of publication of application: **14.01.2015**
(21) Application number: 13757626.0
(22) Date of filing: 06.03.2013
(51) Int. Cl.: C01B 3/38, H01M 8/04, H01M 8/06

(54) **HYDROGEN GENERATING DEVICE AND OPERATION METHOD THEREFOR, AND FUEL-CELL SYSTEM**

(30) Priority: 08.03.2012 JP 2012051424
(71) Applicant: Panasonic Corporation, Kadoma-shi, Osaka 571-8501 (JP)
(72) Inventor: YASUDA, Shigeki, Osaka 540-6207 (JP); TATSUI, Hiroshi, Osaka 540-6207 (JP); ASO, Tomonori, Osaka 540-6207 (JP); OZEKI, Masataka, Osaka 540-6207 (JP)
(74) Representative: Grünecker, Kinkeldey, Stockmair & Schwanhäusser
(86) International application number: PCT/JP2013/001403
(87) International publication number: WO 2013/132847

(57) **Abstract**

A hydrogen generation apparatus (1) includes a reformer (7), a raw material supply device (12), a mass flowmeter (10), a volumetric flowmeter (11), a water supply device (13), a combustor (15), a combustion air supply device (16), an oxidizer (9), an oxidizing gas supply device (14), and a controller (17). The controller is configured to change at least one of a supply amount of combustion air and a supply amount of an oxidizing gas in a case where a second ratio, which is a ratio of a mass flow rate of a raw material gas to a volumetric flow rate of the raw material gas, has changed.

## Description

### Technical Field

The present invention relates to a hydrogen generation apparatus, a method of operating the same, and a fuel cell system. The present invention particularly relates to: a hydrogen generation apparatus configured to generate a hydrogen-containing gas by causing a reforming reaction of a hydrocarbon-based raw material gas with water; a fuel cell system including the hydrogen generation apparatus and a fuel cell that is configured to generate electric power by using the hydrogen-containing gas; and a method of operating the fuel cell system.

### Background Art

Conventional hydrogen generation apparatuses generate a hydrogen-containing gas by causing, with reforming water, a reforming reaction of a hydrocarbon-based raw material gas supplied to a reformer. The hydrogen-containing gas contains a trace amount of carbon monoxide. In order to remove carbon monoxide from the hydrogen-containing gas, the hydrogen-containing gas is supplied to carbon monoxide removers, such as a shift converter and a selective oxidizer. In the shift converter, carbon monoxide and water react with each other. In the selective oxidizer, carbon monoxide and oxygen react with each other. As a result, carbon monoxide is removed from the hydrogen-containing gas. Then, the hydrogen-containing gas from which carbon monoxide has been removed is supplied to, for example, a fuel cell system. In the fuel cell system, the hydrogen-containing gas is used for electric power generation by a fuel cell. The hydrogen-containing gas that has not been used for the electric power generation, and the raw material gas that has not undergone the reforming reaction in the reformer, are supplied to a combustor as combustible gases, and the combustible gases are combusted with oxygen in the combustor. As a result, the reformer, which is positioned near the combustor, is heated to a suitable temperature.

In such a hydrogen generation apparatus as described above, the amount of reforming water and the amount of raw material gas supplied to the reformer are controlled such that the molar ratio of the reforming water to carbon in the hydrocarbon-based raw material gas (this molar ratio will hereinafter be referred to as "S/C" as necessary) becomes a predetermined value (e.g., S/C = 3). However, if the composition of the raw material gas changes, then the S/C deviates from the predetermined value, causing problems regarding the durability and efficiency of the hydrogen generation apparatus and the fuel cell. In order to overcome such problems, for example, a hydrogen production plant controller disclosed in Patent Literature 1 calculates an average molecular weight of a raw material gas based on a ratio between a volumetric flow rate of the raw material gas and a mass flow rate of the raw material gas. Based on the average molecular weight and the mass flow rate of the raw material gas, the flow rate of steam or the raw material gas is controlled.

### Citation List

### Patent Literature

PTL 1: Japanese Laid-Open Patent Application Publication No. 2004-59337

### Summary of Invention

### Technical Problem

However, although the conventional technique disclosed in Patent Literature 1 controls the flow rate of the steam or the raw material gas, which is supplied to a reformer, in accordance with a change in the composition of the raw material gas, the conventional technique disclosed in Patent Literature 1 does not control the amount of oxygen supplied to a selective oxidizer and a combustor. Therefore, problems regarding the performance of the hydrogen generation apparatus and the durability and efficiency of the fuel cell system still remain.

For example, if a hydrocarbon gas component in the raw material gas changes, causing an increase in the number of moles of carbon atoms in 1 mole of the raw material gas, then the carbon monoxide concentration in the hydrogen-containing gas increases. In this case, if the amount of oxygen supplied to the selective oxidizer is not changed, then the amount of oxygen relative to the amount of carbon monoxide becomes insufficient in the selective oxidizer. As a result, carbon monoxide is not removed sufficiently and remains in the hydrogen-containing gas. If the hydrogen-containing gas in which carbon monoxide remains is supplied to the fuel cell, then catalytic activity in the fuel cell is lowered due to the carbon monoxide, causing degradation in the durability and power generation efficiency of the fuel cell.

If the number of moles of carbon atoms in 1 mole of the raw material gas decreases, then the combustion heat in the combustor is reduced, causing a decrease in the temperature of the reformer which is heated by the combustion heat from the combustor. Consequently, the proportion of the raw material gas reformed in the reformer to the entire raw material gas is lowered; the generation amount of the hydrogen-containing gas decreases; and the efficiency of the hydrogen generation apparatus and the fuel cell degrades. On the other hand, if the number of moles of carbon atoms in 1 mole of the raw material gas increases, then the amount of oxygen becomes insufficient for the combustion of combustible gases. As a result, perfect combustion of the combustible gases is not achieved, and thereby carbon monoxide is generated. In addition, the amount of combustible gases discharged without being combusted increases, causing degradation in the efficiency of the hydrogen generation apparatus.

The present invention has been made in order to solve the above-described problems. An object of the present invention is to provide a hydrogen generation apparatus and a fuel cell system with improved efficiency and durability.

### Solution to Problem

A hydrogen generation apparatus according to one aspect of the present invention includes: a reformer configured to generate a hydrogen-containing gas though a reforming reaction between a raw material gas and reforming water; a raw material supply device configured to supply the raw material gas; a mass flowmeter configured to measure a mass flow rate of the raw material gas; a volumetric flowmeter configured to measure a volumetric flow rate of the raw material gas; a water supply device configured to supply the reforming water; a combustor configured to combust at least one of combustible gases with air to heat the reformer, the combustible gases being the raw material gas and the hydrogen-containing gas; a combustion air supply device configured to supply the air; an oxidizer configured to oxidize carbon monoxide in the hydrogen-containing gas with an oxidizing gas; an oxidizing gas supply device configured to supply the oxidizing gas; and a controller. The controller is configured to control at least one of a supply amount of the air supplied by the combustion air supply device and a supply amount of the oxidizing gas supplied by the oxidizing gas supply device based on a second ratio, which is a ratio of the mass flow rate of the raw material gas to the volumetric flow rate of the raw material gas.

### Advantageous Effects of Invention

The present invention is configured as described above, and provides an advantageous effect of being able to provide a hydrogen generation apparatus and a fuel cell system with improved efficiency and durability compared to conventional technology.

The above object, other objects, features, and advantages of the present invention will be made clear by the following detailed description of embodiments with reference to the accompanying drawings.

### Brief Description of Drawings

[Fig. 1] Fig. 1 shows the configuration of a hydrogen generation apparatus according to Embodiment 1 of the present invention.
[Fig. 2] Fig. 2 is a flowchart showing one example where a controller controls a combustion air supply device in the hydrogen generation apparatus of Fig. 1.
[Fig. 3] Fig. 3 is a flowchart showing one example where the controller controls a water supply device in the hydrogen generation apparatus of Fig. 1.
[Fig. 4] Fig. 4 is a flowchart showing one example where the controller controls an oxidizing gas supply device in the hydrogen generation apparatus of Fig. 1.
[Fig. 5] Fig. 5 shows the configuration of a fuel cell system according to Embodiment 2 of the present invention.
[Fig. 6] Fig. 6 is a flowchart showing one example of control of a raw material supply device in the fuel cell system of Fig. 5.
[Fig. 7] Fig. 7 is a flowchart showing one example of control of the water supply device, the combustion air supply device, and the oxidizing gas supply device in the fuel cell system of Fig. 5.

### Description of Embodiments

A hydrogen generation apparatus according to a first aspect of the present invention includes: a reformer configured to generate a hydrogen-containing gas though a reforming reaction between a raw material gas and reforming water; a raw material supply device configured to supply the raw material gas; a mass flowmeter configured to measure a mass flow rate of the raw material gas; a volumetric flowmeter configured to measure a volumetric flow rate of the raw material gas; a water supply device configured to supply the reforming water; a combustor configured to combust at least one of combustible gases with air to heat the reformer, the combustible gases being the raw material gas and the hydrogen-containing gas; a combustion air supply device configured to supply the air; an oxidizer configured to oxidize carbon monoxide in the hydrogen-containing gas with an oxidizing gas; an oxidizing gas supply device configured to supply the oxidizing gas; and a controller. The controller is configured to control at least one of a supply amount of the air supplied by the combustion air supply device and a supply amount of the oxidizing gas supplied by the oxidizing gas supply device based on a second ratio, which is a ratio of the mass flow rate of the raw material gas to the volumetric flow rate of the raw material gas.

A hydrogen generation apparatus according to a second aspect of the present invention may be configured such that the hydrogen generation apparatus according to the first aspect further includes a temperature detector configured to detect a temperature of the reformer. The controller may be configured such that, in a case where a supply amount of the raw material gas while the raw material supply device is being controlled such that the temperature detected by the temperature detector becomes a first predetermined temperature is a first predetermined amount, the controller controls at least one of the supply amount of the air and the supply amount of the oxidizing gas based on the second ratio.

A hydrogen generation apparatus according to a third aspect of the present invention may be configured such that, in the hydrogen generation apparatus according to the second aspect, the controller is configured such that, when the supply amount of the raw material gas after a first predetermined time has elapsed since a generation amount of the hydrogen-containing gas has become a second predetermined amount is the first predetermined amount, the controller changes at least one of the supply amount of the air and the supply amount of the oxidizing gas based on the second ratio.

A hydrogen generation apparatus according to a fourth aspect of the present invention may be configured such that, in the hydrogen generation apparatus according to any one of the first to third aspects, the controller is configured such that, when the second ratio has changed, the controller changes one of a supply amount of the raw material gas supplied by the raw material supply device and a supply amount of the reforming water supplied by the water supply device based on the other one of the supply amount of the raw material gas and the supply amount of the reforming water.

A fuel cell system according to a fifth aspect of the present invention may include: the hydrogen generation apparatus according to any one of the first to fourth aspects; and a fuel cell configured to generate electric power by using the hydrogen-containing gas that is supplied from the hydrogen generation apparatus.

A fuel cell system according to a sixth aspect of the present invention may be configured such that the fuel cell system according to the fifth aspect further includes a temperature detector configured to detect a temperature of the reformer. The controller may be configured such that, in a case where a supply amount of the raw material gas while the raw material supply device is being controlled such that the temperature detected by the temperature detector becomes a first predetermined temperature is a first predetermined amount, in a start-up step before the fuel cell generates predetermined electric power, when the supply amount of the raw material gas after a first predetermined time has elapsed since a generation amount of the hydrogen-containing gas has become a second predetermined amount is the first predetermined amount, the controller controls at least one of the supply amount of the air and the supply amount of the oxidizing gas based on the second ratio.

A fuel cell system according to a seventh aspect of the present invention may be configured such that the fuel cell system according to the fifth or sixth aspect further includes a temperature detector configured to detect a temperature of the reformer. The controller may be configured such that, in a case where a supply amount of the raw material gas while the raw material supply device is being controlled such that the temperature detected by the temperature detector becomes a first predetermined temperature is a first predetermined amount, in a power generation step in which the fuel cell generates predetermined electric power, when the supply amount of the raw material gas after a second predetermined time has elapsed is the first predetermined amount, the controller controls at least one of the supply amount of the air and the supply amount of the oxidizing gas based on the second ratio.

A fuel cell system according to an eighth aspect of the present invention may be configured such that, in the fuel cell system according to the seventh aspect, the controller is configured such that, when the second ratio has changed by an amount greater than or equal to a third predetermined amount, the controller controls the generated electric power to be the predetermined electric power, and when the supply amount of the raw material gas after the second predetermined time has elapsed since the generated electric power has become the predetermined electric power is the first predetermined amount, the controller controls at least one of the supply amount of the air and the supply amount of the oxidizing gas based on the second ratio.

A fuel cell system according to a ninth aspect of the present invention may be configured such that the fuel cell system according to any one of the fifth to eighth aspects further includes: a temperature detector configured to detect a temperature of the reformer; and a hydrogen consumption amount calculator configured to calculate an amount of hydrogen to be consumed by the fuel cell. The controller may be configured such that, in a case where a supply amount of the raw material gas while the raw material supply device is being controlled such that the temperature detected by the temperature detector becomes a first predetermined temperature is a first predetermined amount, the controller changes the first predetermined amount based on the amount of hydrogen and the second ratio.

A method of operating a hydrogen generation apparatus according to a tenth aspect of the present invention includes: generating, by a reformer, a hydrogen-containing gas through a reforming reaction between a raw material gas and water; combusting, by a combustor, at least one of the raw material gas and the hydrogen-containing gas with air to heat the reformer; causing, by an oxidizer, carbon monoxide in the hydrogen-containing gas to react with an oxidizing gas to remove the carbon monoxide from the hydrogen-containing gas; and controlling at least one of a supply amount of the air to the combustor and a supply amount of the oxidizing gas to the oxidizer based on a second ratio, which is a ratio of a mass flow rate of the raw material gas to a volumetric flow rate of the raw material gas.

Hereinafter, embodiments of the present invention are specifically described with reference to the drawings.

In the drawings, the same or corresponding elements are denoted by the same reference signs, and repeating the same descriptions is avoided below.

### (Embodiment 1)

### (Configuration of Hydrogen Generation Apparatus)

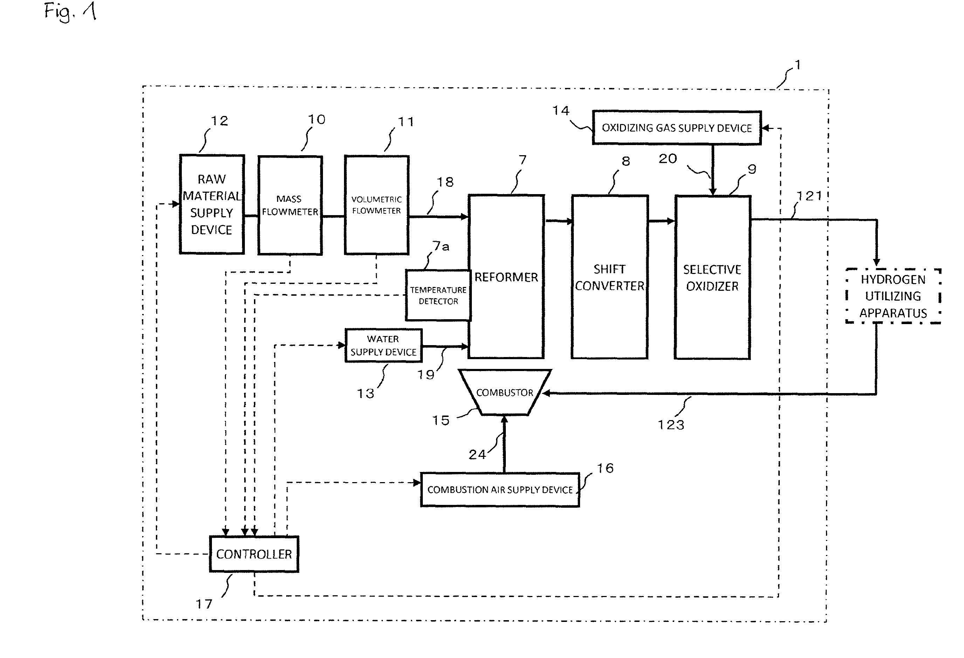

Fig. 1 is a block diagram showing the configuration of a hydrogen generation apparatus 1. The hydrogen generation apparatus 1 is an apparatus configured to generate a hydrogen-containing gas. As shown in Fig. 1, the hydrogen generation apparatus 1 includes a reformer 7. The reformer 7 includes a reforming catalyst (not shown), and is a reactor configured to generate the hydrogen-containing gas by causing a reforming reaction of a raw material gas with water (the water will hereinafter be referred to as "reforming water") in the presence of the reforming catalyst. The reformer 7 is provided with a temperature detector 7a. The temperature detector 7a detects a temperature of the reformer 7, and outputs the detected temperature to a controller 17. The temperature of the reformer 7 to be detected is, for example, the temperature of the reforming catalyst, the temperature of the raw material gas supplied to the reformer 7, or the temperature of the hydrogen-containing gas generated by the reformer 7. A raw material supply device 12 is connected to the reformer 7 via a raw material gas supply passage 18. A water supply device 13 is connected to the reformer 7 via a water supply passage 19.

The raw material supply device 12 is a device configured to supply the raw material gas to the reformer 7 through the raw material gas supply passage 18, and has a function of adjusting the supply amount of the raw material gas. For example, the raw material supply device 12 is constituted by a gas cylinder filled with the raw material gas, or constituted by a booster and a flow rate adjusting valve that are connected to a raw material gas supply infrastructure. The raw material gas contains, as a main component, an organic compound containing at least a hydrocarbon CₙHₘ composed of carbon and hydrogen. It should be noted that a desulfurizer for reducing sulfur components in the raw material gas may be connected to the raw material gas supply passage 18.

A mass flowmeter 10 and a volumetric flowmeter 11 are connected to the raw material gas supply passage 18. The mass flowmeter 10 measures a mass flow rate Mf of the raw material gas supplied from the raw material supply device 12 to the reformer 7, and outputs a measured value to the controller 17. The volumetric flowmeter 11 measures a volumetric flow rate Vfofthe raw material gas supplied from the raw material supply device 12 to the reformer 7, and outputs a measured value to the controller 17. Here, moving average values are used as the measured flow rates of the raw material gas. However, as an alternative, instantaneous values may be used. It should be noted that in order to eliminate influences of a temperature change and a pressure change, the volumetric flowmeter 11 may convert the measured volumetric flow rate of the raw material gas into a volumetric flow rate under a constant temperature and a constant pressure. However, for example, if influences of a temperature change and a pressure change are small enough to be regarded as permissible errors, then it is not essential for the measured volumetric flow rate of the raw material gas to be converted into a volumetric flow rate under a constant temperature and a constant pressure. It should be noted that the volumetric flowmeter 11 and the raw material supply device 12 may be integrated together. In this case, for example, a raw material supply device of a fixed volume type configured to supply the raw material gas to the reformer 7 at a predetermined fixed volumetric flow rate with a predetermined operating amount is used. Since the fixed volume type raw material supply device supplies the raw material gas to the reformer 7, the fixed volume type raw material supply device serves as the raw material supply device 12. In addition, since the fixed volume type raw material supply device is capable of calculating the volumetric flow rate of the raw material gas based on an operating amount, the fixed volume type raw material supply device also serves as the volumetric flowmeter 11. The operating amount herein is, for example, a voltage value, a current value, a frequency, or a duty ratio supplied to the fixed volume type raw material supply device.

The water supply device 13 is a device configured to supply reforming water in a liquid or gas (steam) form to the reformer 7 through the water supply passage 19, and has a function of adjusting the supply amount of the reforming water. The water supply device 13 is connected to, for example, a water source such as a source of tap water. The water supply device 13 is configured as, for example, a plunger pump capable of constant delivery.

The upstream end of a hydrogen-containing gas supply passage 121 is connected to the reformer 7, and the downstream end of the hydrogen-containing gas supply passage 121 is connected to, for example, a hydrogen utilizing apparatus such as a fuel cell. Since the hydrogen-containing gas generated by the reformer 7 contains carbon monoxide, carbon monoxide removers such as a shift converter 8 and a selective oxidizer 9 are connected to the hydrogen-containing gas supply passage 121. However, if it is not necessary to remove carbon monoxide from the hydrogen-containing gas, these carbon monoxide removers need not be provided.

The shift converter 8 is connected to the reformer 7 via the hydrogen-containing gas supply passage 121. The hydrogen-containing gas generated by the reformer 7, and steam that has not been used in the reforming reaction, are supplied to the shift converter 8 through the hydrogen-containing gas supply passage 121. The shift converter 8 causes, with steam, a shift reaction of carbon monoxide contained in the hydrogen-containing gas to convert the carbon monoxide into hydrogen and carbon dioxide, thereby removing the carbon monoxide from the hydrogen-containing gas. It should be noted that the water supply device 13 and the water supply passage 19 are used for supplying water to both the reformer 7 and the shift converter 8. However, as an alternative, a water supply device and a water supply passage for supplying water to the shift converter 8 may be provided separately from the water supply device 13 and the water supply passage 19, which are provided for the reformer 7. For example, a branch passage branching off from the water supply passage 19 may be provided, and steam from the water supply device 13 may be directly supplied to the shift converter 8 through the branch passage. A water supply device different from the water supply device 13 may be provided, and steam may be supplied to the shift converter 8 from the different water supply device.

The selective oxidizer 9 is connected to the shift converter 8 via the hydrogen-containing gas supply passage 121. The hydrogen-containing gas from which carbon monoxide has been removed by the shift converter 8 is supplied to the selective oxidizer 9. An oxidizing gas supply device 14 is connected to the selective oxidizer 9 via an oxidizing gas supply passage 20. The oxidizing gas supply device 14 is a device configured to supply an oxidizing gas to the selective oxidizer 9 through the oxidizing gas supply passage 20, and has a function of controlling the supply amount of the oxidizing gas. If air is used as the oxidizing gas, then, for example, a blower, a fan, or the like is used as the oxidizing gas supply device 14. The selective oxidizer 9 oxidizes remaining carbon monoxide in the hydrogen-containing gas by using the oxidizing gas to convert the carbon monoxide into carbon dioxide, thereby removing the carbon monoxide from the hydrogen-containing gas.

A combustor 15 is connected to the hydrogen utilizing apparatus via an exhaust gas passage 123, and is supplied with exhaust gas through the exhaust gas passage 123. The exhaust gas contains the following gases as combustible gases: the hydrogen-containing gas that has not been consumed by the hydrogen utilizing apparatus and thus remains; and the raw material gas that has not undergone the reforming reaction in the reformer 7 and thus remains. A combustion air supply device 16 is connected to the combustor 15 via a combustion air supply passage 24. Air for use in combustion (hereinafter, "combustion air") is supplied from the combustion air supply device 16 to the combustor 15 through the combustion air supply passage 24. A fan device, such as a blower or a sirocco fan, capable of adjusting the supply amount of the combustion air and having a suction opening open to the atmosphere is used as the combustion air supply device 16. The combustor 15 combusts the combustible gases with the combustion air to generate combustion heat, thereby heating the reformer 7 positioned near the combustor 15. It should be noted that not both the combustible gases, i.e., both the hydrogen-containing gas and the raw material gas, but only one of the combustible gases may be combusted.

The controller 17 is connected to component units of the hydrogen generation apparatus I via signal lines. The controller 17 controls the component units by transmitting and receiving signals to and from the component units. For example, the controller 17 controls supply amounts from the raw material supply device 12, the water supply device 13, the oxidizing gas supply device 14, and the combustion air supply device 16 based on measurement values obtained from the temperature detector 7a, the mass flowmeter 10, and the volumetric flowmeter 11. The controller 17 may be configured as a microcontroller, or may be configured as an MPU, PLC (Programmable Logic Controller), logic circuit, or the like. The controller 17 includes a storage unit (not shown). The storage unit stores a basic composition of the raw material gas, such as the average composition of a hydrocarbon gas that is a main component of the raw material gas, and the number of moles n of carbon atoms in 1 mole of the raw material gas (hereinafter, "carbon number n"). It should be noted that it is not necessary for the storage unit to be included in the controller 17 if the controller 17 can access the storage unit.

### (Operations in Hydrogen Generation Apparatus)

Operations in the hydrogen generation apparatus 1, which is configured as described above, are performed mainly based on control by the controller 17. Described below is a case where the raw material gas is mainly constituted by saturated hydrocarbon gas CₙH₂ₙ₊₂.

The raw material gas is supplied by the raw material supply device 12 to the combustor 15 through the reformer 7, and also, combustion air is supplied by the combustion air supply device 16 to the combustor 15. In the combustor 15, the raw material gas is combusted with the combustion air, and the resulting combustion heat heats the reformer 7 to a first predetermined temperature. The reformer 7 is supplied with the raw material gas and reforming water.

In the reformer 7, a reforming reaction occurs, which is mainly represented by CₙH₂ₙ₊₂ + 2nH₂O→(3n+1)H₂ + nCO₂ and CₙH₂ₙ₊₂ + nH₂O → (2n+1) H₂ + nCO. Through the reforming reaction, a hydrogen-containing gas is generated from the raw material gas and the reforming water. Of the raw material gas, the proportion of the raw material gas that undergoes the reforming reaction depends on the temperature of the reformer 7. Here, in order to generate the hydrogen-containing gas in a second predetermined amount, for example, the temperature of the reformer 7 is set to the first predetermined temperature of 700 °C, such that the proportion of the raw material gas that undergoes the reforming reaction becomes 85 to 95 %.

The hydrogen-containing gas generated by the reformer 7 contains, for example, about 10 % of carbon monoxide. Therefore, the hydrogen-containing gas is supplied to the shift converter 8 in order to remove the carbon monoxide from the hydrogen-containing gas. At the time, steam that has not been used for the reforming reaction in the reformer 7 is also supplied to the shift converter 8. In the shift converter 8, a shift reaction occurs, which is mainly represented by CO + H₂O → H₂ + CO₂. Through the shift reaction, the carbon monoxide contained in the hydrogen-containing gas is removed.

In addition, since the hydrogen-containing gas still contains a trace amount of carbon monoxide, the hydrogen-containing gas is supplied to the selective oxidizer 9. The oxidizing gas is also supplied to the selective oxidizer 9 by the oxidizing gas supply device 14. In the selective oxidizer 9, an oxidation reaction occurs, which is mainly represented by CO + (1/2) O₂ → CO₂. Through the oxidation reaction, the carbon monoxide concentration in the hydrogen-containing gas is reduced to 10 ppm or lower.

The hydrogen-containing gas from which carbon monoxide has been removed is supplied to such a hydrogen utilizing apparatus as a fuel cell, and remaining exhaust gas is supplied to the combustor 15. The exhaust gas contains the following gases as combustible gases: the hydrogen-containing gas that has not been consumed by the hydrogen utilizing apparatus and thus remains; and the raw material gas that has not been used in the reforming reaction. Combustion air is supplied to the combustor 15 by the combustion air supply device 16. In the combustor 15, combustion reactions occur, which are mainly represented by H₂ + (1/2) O₂ → H₂O and CₙH₂ₙ₊₂ + {(3n+1)/2} O₂ → nCO₂ + (n+1)H₂O. The resulting combustion heat heats the reformer 7 to the first predetermined temperature.

The first predetermined temperature depends on the combustion heat. The combustion heat can be calculated from the supply amount of the raw material gas and the amount of heat in each combustion reaction. The amount of heat in each combustion reaction depends on the carbon number n in the raw material gas. For example, in a case where the raw material gas is methane CH₄, the combustion heat is 890 (kJ/mol), and in a case where the raw material gas is propane C₃H₈, the combustion heat is 2204 (kJ/mol). The carbon number n in the raw material gas can be calculated from a second ratio, which will be described below. Accordingly, the combustion heat, i.e., the first predetermined temperature, depends on the supply amount of the raw material gas and the second ratio. Accordingly, a first predetermined amount, which is the supply amount of the raw material gas necessary for causing the temperature of the reformer 7 to become the first predetermined temperature, is correlated with the second ratio, and the correlation is stored in the storage unit. Therefore, feedback control of the supply amount of the raw material gas is performed in accordance with the second ratio (the composition of the raw material gas) such that the temperature of the reformer 7 is kept at the first predetermined temperature.

### (Detection of Change in Composition of Raw Material Gas)

As described above, in the operations of the hydrogen generation apparatus 1, the amount of water necessary for the reforming reaction and the shift reaction, and the amount of oxygen necessary for the oxidation reaction and the combustion reactions, depend on the composition of the raw material gas. Although the basic composition of the raw material gas is calculated in advance and stored in the storage unit, the composition of the raw material gas may change when the saturated hydrocarbon gas CₙH₂ₙ₊₂, which is the main component of the raw material gas, changes. Therefore, in the control of the aforementioned supply amounts, it is necessary to detect a change in the composition of the raw material gas and the changed composition. Hereinafter, the detection of a change in the composition of the raw material gas and the changed composition is described.

The carbon number n in the raw material gas, which represents the composition of the raw material gas, and a change in the carbon number n can be calculated from the second ratio Mf/Vf. The second ratio Mf/Vf is the ratio of the mass flow rate Mf of the raw material gas, which is measured by the mass flowmeter 10, to the volumetric flow rate Vf of the raw material gas, which is measured by the volumetric flowmeter 11. Specifically, in the mass flow rate Mf of the raw material gas, the influence of a change in mass flow velocity (flow velocity × density p) is dominant. The mass flow velocity (flow velocity × density p) depends on the composition CₙH₂ₙ₊₂ of the raw material gas. Accordingly, the second ratio Mf/Vf is correlated with the composition of the raw material gas, and the correlation can be represented as (14n+2)/Vm = Mf/Vf. Based on this relationship, the carbon number n in the raw material gas can be represented as n = {(Mf/Vf) Vm - 2}/14, and can be calculated from the second ratio Mf/Vf. Here, Vm represents the volume of 1 mole of the raw material gas, and can be calculated from a temperature T and a pressure P based on a relationship of Vm = RT/P.

Therefore, by detecting a change in the second ratio Mf/Vf, the controller 17 can determine that a change has occurred in the carbon number n in the raw material gas, i.e., a change has occurred in the composition of the raw material gas. In addition, based on the above correlation, the carbon number n in the raw material gas can be calculated from the second ratio Mf/Vf.

However, there is a case where the composition of the raw material gas changes for the reason that invading gas, such as nitrogen, becomes mixed into the raw material gas. In the description below, a case where city gas containing methane as a main component is used as the raw material gas is described.

The invading gas is such gas as follows: in the combustor 15, no exothermic reaction of the invading gas occurs, or even if an exothermic reaction of the invading gas occurs, combustion heat derived from the exothermic reaction is less than that of hydrocarbon gas. For example, the invading gas is such gas as nitrogen. Therefore, in a case where the invading gas is contained in the raw material gas, the combustion heat in the combustor 15 is reduced, causing a decrease in the temperature of the reformer 7 heated by the combustion heat. Accordingly, in this case, while the supply amount of the raw material gas is being controlled such that the temperature of the reformer 7 becomes the first predetermined temperature, the supply amount of the raw material gas is greater than the first predetermined amount, which is the supply amount of the raw material gas necessary for causing the temperature of the reformer 7 to become the first predetermined temperature, in order to compensate for the decrease in the temperature of the reformer 7. Also in a case where the carbon number n in the raw material gas decreases, the combustion heat in the combustor 15 is reduced, causing a decrease in the temperature of the reformer 7 heated by the combustion heat, resulting in an increase in the supply amount of the raw material gas. However, the carbon number n in the raw material gas does not become lower than the carbon number 1 of methane, which is the raw material gas. Accordingly, the controller 17 can detect a change in the composition of the raw material gas, the change being caused as a result of the invading gas being mixed into the raw material gas, when the volumetric flow rate of the raw material gas, which is measured by the volumetric flowmeter 11, has become greater than the first predetermined amount.

### (Control of Combustion Air Supply Device)

As described above, in the operations of the hydrogen generation apparatus 1, combustion air is supplied to the combustor 15 from the combustion air supply device 16. Hereinafter, the manner of control of the supply amount of the combustion air is described. In the description below, a state where no invading gas is contained in the raw material gas, i.e., a state where the raw material gas in the first predetermined amount is supplied such that the temperature detected by the temperature detector 7a (the temperature of the reformer 7) becomes the first predetermined temperature, is described.

The supply amount (volumetric flow rate) of the combustion air supplied by the combustion air supply device 16 is controlled by the controller 17, such that a third ratio (air ratio) A/Ao becomes a second setting value. The third ratio is the ratio of a supply amount A, which is an actual amount of combustion air supplied to the combustor 15, to a minimum required air amountAo for achieving perfect combustion of the combustible gases (i.e., theoretical air requirement). The second setting value is set in accordance with, for example, characteristics of the combustor 15 and a necessary amount of heat for a steam reforming reaction, such that the combustible gases combusted with the combustion air in the combustor 15 achieve perfect combustion. For example, the second setting value is 1.0 or higher.

The combustion reactions in the combustor 15 can be mainly represented by H₂ + (1/2) O₂ → H₂O and CₙH₂ₙ₊₂ + {(3n+1)/2} O₂ → nCO₂ + (n+1)H₂O. The theoretical air requirement Ao depends on the amount of combustible gases and the carbon number n in the raw material gas. The carbon number n in the raw material gas can be calculated from the second ratio. The amount of combustible gases is the sum of the amount of hydrogen supplied to the combustor 15 and the amount of raw material gas that has not been used in the reformer 7 and thus remains. The amount of hydrogen supplied to the combustor 15 is obtained by subtracting the amount of hydrogen consumed by the hydrogen utilizing apparatus from the amount of hydrogen generated by the reformer 7.

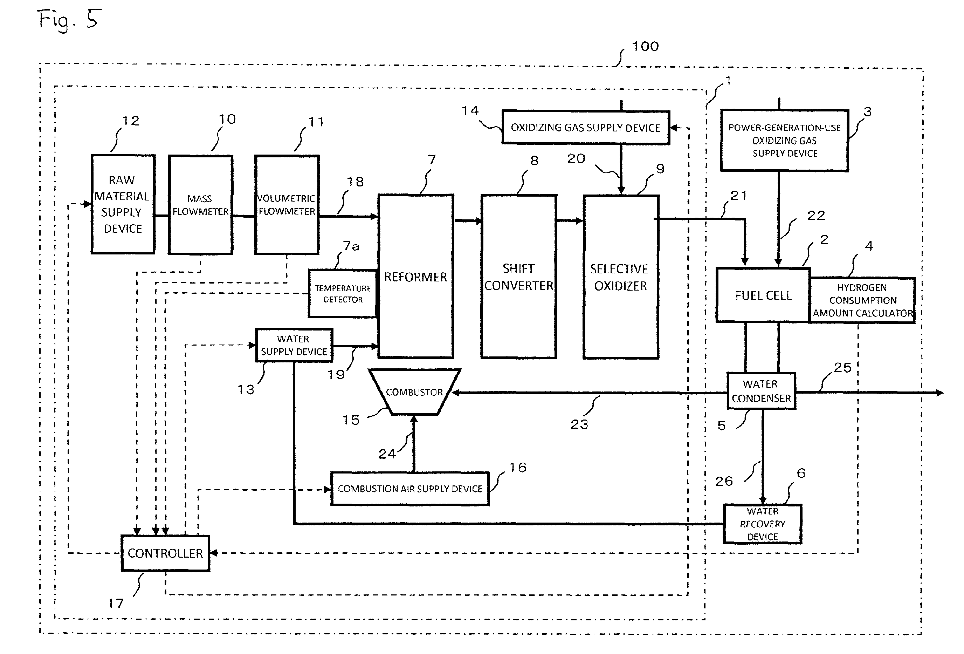

The reforming reaction in the reformer 7 is mainly represented by CₙH₂ₙ₊₂ + 2nH₂O → (3n+1)H₂ + nCO₂ and CₙH₂ₙ₊₂ + nH₂O → (2n+1) H₂ + nCO. Accordingly, the generation amount of hydrogen can be calculated from: the supply amount of the raw material gas; the carbon number n in the raw material gas; and the proportion of the raw material gas that undergoes the reforming reaction. The amount of raw material gas that has not been used in the reformer 7 and thus remains can be calculated from the supply amount of the raw material gas and the proportion of the raw material gas that undergoes the reforming reaction. Here, the raw material gas in the first predetermined amount is supplied such that the temperature of the reformer 7 becomes the first predetermined temperature, i.e., such that the proportion of the raw material gas that undergoes the reforming reaction becomes, for example, 85 to 95 %. As mentioned above, the first predetermined amount depends on the second ratio, and the carbon number n in the raw material gas can be calculated from the second ratio. Accordingly, the amount of hydrogen generated by the reformer 7, and the amount of raw material gas that has not been used in the reformer 7 and thus remains, can be calculated from the second ratio. The amount of hydrogen consumed by the hydrogen utilizing apparatus can be calculated from, for example, a hydrogen consumption amount that is obtained by a hydrogen consumption amount calculator 4 (Fig. 5) of a fuel cell system 100, which will be described below. Since the amount of combustible gases can be calculated based on the second ratio and the hydrogen consumption amount, the theoretical air requirement Ao based on the amount of combustible gases is correlated with the second ratio and the hydrogen consumption amount, and the correlation is stored in the storage unit.

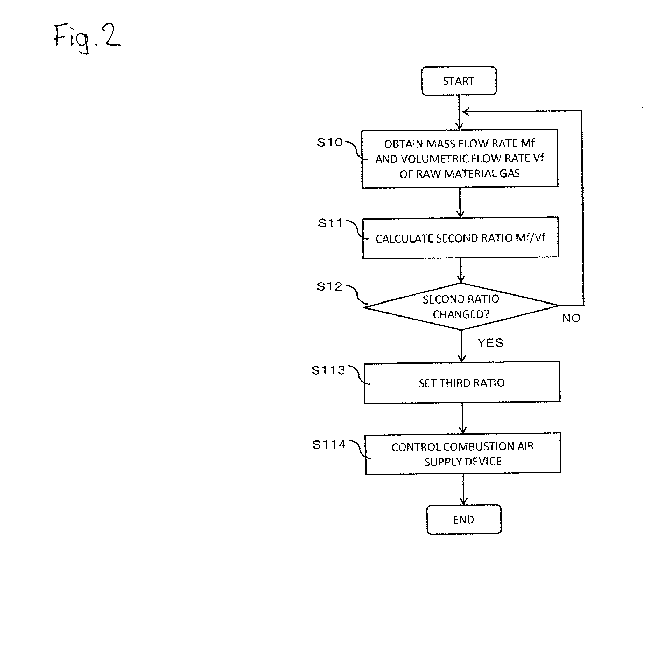

Fig. 2 is a flowchart showing one example where the controller 17 controls the combustion air supply device 16. As shown in Fig. 2, the controller 17 obtains the mass flow rate and the volumetric flow rate of the raw material gas (step S10), and calculates the second ratio from these rates (step S11). If the calculated second ratio has changed from a prestored second ratio or a previously calculated second ratio (step S 12: YES), it means that the composition of the raw material gas has changed from its preset composition or from the composition at the previous measurement. Therefore, the controller 17 obtains the hydrogen consumption amount, and then sets the theoretical air requirement Ao from the second ratio and the hydrogen consumption amount based on the correlation regarding the theoretical air requirement Ao. Next, the controller 17 calculates the supply air amount A from, for example, the rotational frequency of a fan or the like in the combustion air supply device 16, and calculates the third ratio (air ratio) A/Ao, which is the ratio of the supply air amount A to the theoretical air requirement Ao (step S113). Then, the controller 17 controls the combustion air supply device 16 such that the third ratio becomes the second setting value (step S114).

Since the supply amount of the combustion air is based on the second ratio as described above, even if the composition of the raw material gas has changed, the combustion air in an amount that is greater than the theoretical air requirement Ao for achieving perfect combustion of the combustible gases is supplied to the combustor 15. As a result, perfect combustion of the combustible gases with the combustion air is achieved, which allows the combustor 15 to keep the temperature of the reformer 7 at the first predetermined temperature and makes it possible to suppress degradation in the efficiency of the hydrogen generation apparatus 1. In addition, increase in the amount of combustible gases that are discharged without being combusted can be suppressed, and thereby degradation in the efficiency of the hydrogen generation apparatus 1 can be prevented.

### (Control of Water Supply Device)

As described above, in the operations of the hydrogen generation apparatus 1, reforming water supplied from the water supply device 13 is used in the reactions in the reformer 7 and the shift converter 8. Hereinafter, the manner of control of the supply amount of the reforming water is described. In the description below, a state where no invading gas is contained in the raw material gas, i.e., a state where the raw material gas in the first predetermined amount is supplied such that the temperature detected by the temperature detector 7a (the temperature of the reformer 7) becomes the first predetermined temperature, is described.

The supply amount (volumetric flow rate) of the reforming water supplied by the water supply device 13 is controlled by the controller 17, such that a first ratio S/C, which is the molar ratio of the reforming water supplied to the reformer 7 to carbon in the raw material gas, becomes a first setting value. Under a constant pressure and a constant temperature, a molar ratio is equal to a volume ratio. Accordingly, the first ratio can be represented as Vw/(n·Vf), in which Vw represents the volumetric flow rate of the reforming water, and Vf represents the volumetric flow rate of the raw material gas. Here, the first setting value is set in accordance with the following factors: the amount of water used in, for example, the reforming reaction in the reformer 7 and the shift reaction in the shift converter 8; characteristics of the hydrogen generation apparatus 1; and specifications required by the hydrogen utilizing apparatus. The first setting value is preset to 3.0, for example.

Accordingly, the volumetric flow rate Vw of the reforming water is calculated such that the first ratio becomes the first setting value, i.e., such that Vw/(n·Vf) = 3.0, and the water supply device 13 is controlled such that the reforming water is supplied at the calculated volumetric flow rate. For example, in a case where methane is set as the raw material gas, 3 moles of reforming water are supplied per mole of methane since the carbon number n is 1. In a case where propane is set as the raw material gas, 9 moles of reforming water are supplied per mole of propane since the carbon number n is 3.

In this relationship Vw/(n·Vf) = 3.0, the volumetric flow rate Vf of the raw material gas is set to the first predetermined amount, which depends on the second ratio, and the carbon number n in the raw material gas can be calculated from the second ratio. Accordingly, the volumetric flow rate Vw of the reforming water is correlated with the second ratio, and the correlation is stored in the storage unit.

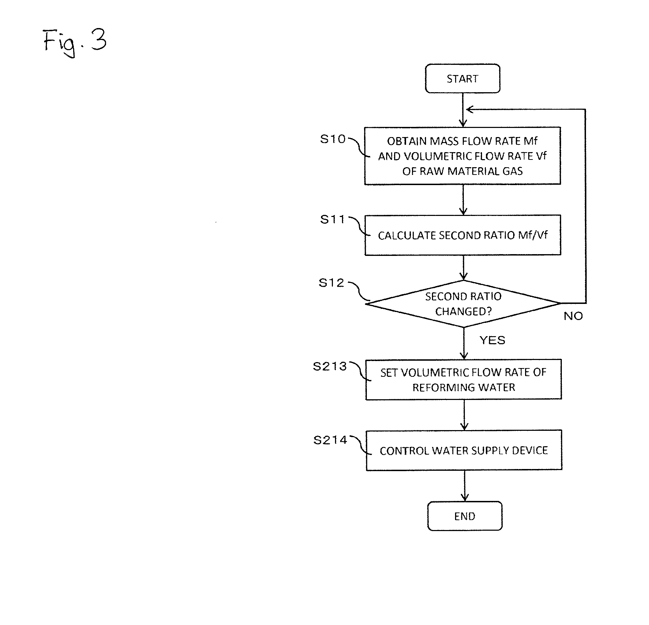

Fig. 3 is a flowchart showing one example where the controller 17 controls the water supply device 13. As shown in Fig. 3, the controller 17 obtains the mass flow rate and the volumetric flow rate of the raw material gas (step S10), and calculates the second ratio from these rates (step S11). If the second ratio has changed (step S12: YES), it means that the composition of the raw material gas has changed. Accordingly, the controller 17 calculates the volumetric flow rate Vw of the reforming water from the second ratio based on the correlation between the second ratio and the volumetric flow rate Vw (step S213), and controls the water supply device 13 such that the volumetric flow rate Vw becomes the calculated volumetric flow rate (step S214).

Since the volumetric flow rate Vw of the reforming water is set based on the second ratio as described above, even if the composition of the raw material gas has changed, the reforming water is supplied by the water supply device 13 such that the first ratio becomes the first setting value. As a result, steam from the reforming water is supplied to the reformer 7 and the shift converter 8 in an amount necessary for the reforming reaction and the shift reaction. Therefore, a situation that arises when a state where the first ratio is lower than the first setting value continues, i.e., a situation where thermal decomposition of an excess amount of the raw material gas occurs due to insufficiency of steam, causing carbon components to be deposited on and adhere to the reforming catalyst, resulting in degradation of the durability of the hydrogen generation apparatus 1, can be prevented. Moreover, a situation that arises when a state where the first ratio is higher than the first setting value continues, i.e., a situation where the amount of heat necessary for transforming the reforming water into steam increases, causing degradation in the efficiency of the reformer 7, can be prevented. Furthermore, a situation where an excess amount of steam that has not been used in the reforming reaction wets the reforming catalyst in the reformer 7, thereby degrading the reforming catalyst and causing degradation in the durability of the hydrogen generation apparatus 1, can be prevented.

### (Control of Oxidizing Gas Supply Device)

As described above, in the operations of the hydrogen generation apparatus 1, the oxidizing gas is supplied to the selective oxidizer 9 from the oxidizing gas supply device 14. Hereinafter, the manner of control of the supply amount of the oxidizing gas is described. In the description below, a state where no invading gas is contained in the raw material gas, i.e., a state where the raw material gas in the first predetermined amount is supplied such that the temperature detected by the temperature detector 7a (the temperature of the reformer 7) becomes the first predetermined temperature, is described.

The oxidation reaction in the selective oxidizer 9 is mainly represented by CO + (1/2) O₂ → CO₂. Accordingly, the supply amount (volumetric flow rate) of the oxidizing gas supplied by the oxidizing gas supply device 14 is set based on the amount of carbon monoxide in the hydrogen-containing gas, and the oxidizing gas supply device 14 is controlled by the controller 17 such that the oxidizing gas in the set amount is supplied. The carbon monoxide is generated through the reaction in the reformer 7, which is mainly represented by CₙH₂ₙ₊₂ + nH₂O → (2n+ 1) H₂ + nCO. Accordingly, the amount of carbon monoxide in the hydrogen-containing gas depends on the supply amount of the raw material gas and the carbon number n in the raw material gas. The supply amount of the raw material gas is controlled to be the first predetermined amount, which depends on the second ratio. The carbon number n in the raw material gas can be calculated from the second ratio. Therefore, a target value of the supply amount (volumetric flow rate) of the oxidizing gas is correlated with the second ratio, and the correlation is stored in the storage unit.

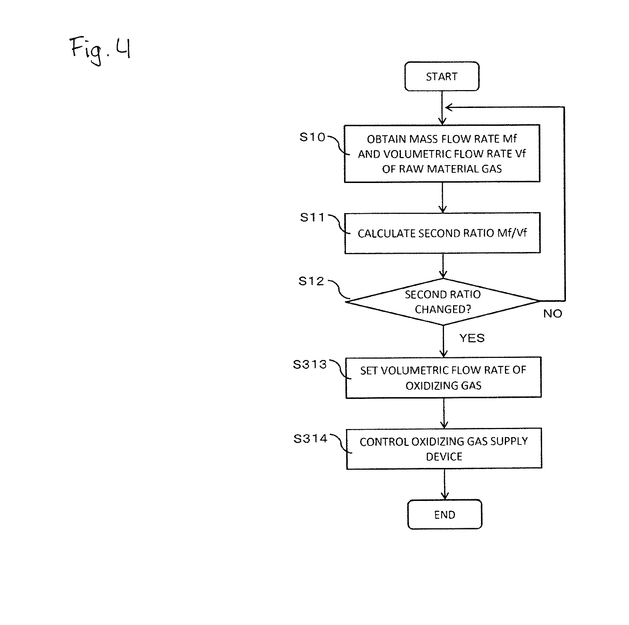

Fig. 4 is a flowchart showing one example where the controller 17 controls the oxidizing gas supply device 14. As shown in Fig. 4, the controller 17 obtains the mass flow rate and the volumetric flow rate of the raw material gas (step S10), and calculates the second ratio from these rates (step S11). Then, if the second ratio has changed (step S12: YES), it means that the composition of the raw material gas has changed. Accordingly, the controller 17 calculates a target value of the supply amount of the oxidizing gas from the second ratio based on the correlation between the volumetric flow rate of the oxidizing gas and the second ratio (step S313), and controls the oxidizing gas supply device 14 such that the supply amount of the oxidizing gas becomes the target value (step S314).

Thus, since the volumetric flow rate of the oxidizing gas supplied to the selective oxidizer 9 is based on the second ratio, even if the composition of the raw material gas has changed, a necessary amount of oxygen for a selective oxidation reaction is supplied to the selective oxidizer 9. As a result, carbon monoxide contained in the hydrogen-containing gas can be removed sufficiently, which makes it possible to maintain the performance of the hydrogen generation apparatus 1.

### (Embodiment 2)

### (Configuration of Fuel Cell System)

Fig. 5 is a block diagram showing the configuration of the fuel cell system 100. As shown in Fig. 5, the fuel cell system 100 includes: the hydrogen generation apparatus 1; and a fuel cell 2 configured to generate electric power by using the hydrogen-containing gas that is supplied from the hydrogen generation apparatus 1.

The fuel cell 2 includes an anode (not shown) and a cathode (not shown). The hydrogen generation apparatus 1 is connected to the anode via a fuel gas supply passage 21, and a power-generation-use oxidizing gas supply device 3 is connected to the cathode via a power-generation-use oxidizing gas supply passage 22. The fuel cell 2 generates electric power by causing a power-generating reaction between hydrogen contained in a fuel gas supplied to the anode and oxygen contained in a power-generation-use oxidizing gas supplied to the cathode. Heat and water are generated when the electric power is generated. A conventional device, for example, a hot water recovery device or the like, may be used as a heat recovery unit for recovering the generated heat.

The hydrogen generation apparatus 1 supplies the hydrogen-containing gas as the fuel gas to the anode of the fuel cell 2 through the fuel gas supply passage 21. At the time, the hydrogen-containing gas contains a certain amount of steam previously used in the reforming reaction. However, steam may be further added to the hydrogen-containing gas. It should be noted that it is not necessary for the controller 17 to be disposed inside the hydrogen generation apparatus 1. For example, the controller 17 may be disposed separately from the hydrogen generation apparatus 1. Moreover, other than the controller 17 controlling the operations of the hydrogen generation apparatus 1, a controller configured to control the operations of components in the fuel cell system 100, the components being different from the hydrogen generation apparatus 1, may be provided.

The power-generation-use oxidizing gas supply device 3 is a device configured to supply the power-generation-use oxidizing gas to the cathode of the fuel cell 2 through the power-generation-use oxidizing gas supply passage 22, and has a function of adjusting the supply amount of the power-generation-use oxidizing gas. For example, a fan device, such as a blower or a sirocco fan with its suction opening open to the atmosphere, is used as the power-generation-use oxidizing gas supply device 3 in a case where air is used as the power-generation-use oxidizing gas. It should be noted that a humidifier may be provided on the power-generation-use oxidizing gas supply passage 22. In this case, the power-generation-use oxidizing gas is humidified by a constant amount of steam.

The hydrogen consumption amount calculator 4 is configured as an arithmetic operation device such as a microcontroller. The hydrogen consumption amount calculator 4 calculates the amount of hydrogen to be consumed in the power-generating reaction in the fuel cell 2 (hereinafter, "hydrogen consumption amount") based on electric power that is to be generated through the power-generating reaction. Then, the hydrogen consumption amount calculator 4 outputs the calculated hydrogen consumption amount to the controller 17.

A water condenser 5 is connected to the anode of the fuel cell 2 via an exhaust fuel gas passage 23, and connected to the cathode of the fuel cell 2 via an exhaust oxidizing gas passage 25. An exhaust fuel gas and an exhaust oxidizing gas are discharged from the fuel cell 2 to the water condenser 5 through the exhaust fuel gas passage 23 and the exhaust oxidizing gas passage 25, respectively. Since the exhaust fuel gas and the exhaust oxidizing gas contain steam, the water condenser 5 condenses the steam into condensation water by cooling down the exhaust fuel gas and the exhaust oxidizing gas. For example, a heat exchanger is used as the water condenser 5. It should be noted that water may be condensed from one of the exhaust fuel gas and the exhaust oxidizing gas.

A water recovery device 6 is connected to the water condenser 5 via a condensation water passage 26. Water condensed by the water condenser 5 is supplied to the water recovery device 6 through the condensation water passage 26, and recovered by the water recovery device 6. The water recovery device 6 may include a purifier or a filter for removing invading gas that contains, for example, electrically conductive ions. The water recovery device 6 is connected to the water supply device 13 via the water supply passage 19, and the recovered water, which serves as a water source, is supplied to the water supply device 13 through the water supply passage 19.

The combustor 15 is connected to the water condenser 5 via the exhaust fuel gas passage 23, and the exhaust fuel gas from which water has been removed by the water condenser 5 is supplied to the combustor 15. The exhaust fuel gas contains the following gases as combustible gases: the hydrogen gas that has not been consumed in the power-generating reaction in the fuel cell 2; and the raw material gas that has not been used in the reforming reaction in the reformer 7. The combustor 15 combusts the combustible gases, such that the reformer 7 is heated by the resulting combustion heat.

### (Operations in Fuel Cell System)

The hydrogen consumption amount calculator 4 calculates the hydrogen consumption amount in the power-generating reaction based on electric power to be generated by the fuel cell 2, and outputs the calculated hydrogen consumption amount to the controller 17. The controller 17 controls the raw material supply device 12 such that the temperature of the reformer 7 detected by the temperature detector 7a becomes the first predetermined temperature in order to generate the hydrogen-containing gas in the second predetermined amount, which contains hydrogen in an amount greater than or equal to the hydrogen consumption amount.

Here, the raw material supply device 12 supplies the reformer 7 with the raw material gas in the first predetermined amount corresponding to the composition of the raw material gas, and also, the water supply device 13 supplies the reformer 7 with the reforming water. The hydrogen-containing gas in the second predetermined amount is generated by the reformer 7 whose temperature is controlled to be the first predetermined temperature. Then, the hydrogen-containing gas is supplied to the shift converter 8. In the shift converter 8, carbon monoxide is shift-converted by means of steam, and is thereby reduced. Thereafter, the hydrogen-containing gas is supplied to the selective oxidizer 9. In the selective oxidizer 9, carbon monoxide is oxidized by the oxidizing gas supplied by the oxidizing gas supply device 14, and is thereby removed from the hydrogen-containing gas.

The hydrogen-containing gas from which carbon monoxide has been removed is supplied from the hydrogen generation apparatus 1 to the fuel cell 2, and also, the power-generation-use oxidizing gas supply device 3 supplies the power-generation-use oxidizing gas to the fuel cell 2. Then, the power-generating reaction between hydrogen in the hydrogen-containing gas and oxygen in the power-generation-use oxidizing gas occurs in the fuel cell 2, and thereby predetermined electric power is generated. The generated power is supplied to an electrical load (not shown).

In accordance with the power-generating reaction in the fuel cell 2, heat and water are generated. The generated heat is supplied to a heat load (not shown). The exhaust fuel gas and the exhaust oxidizing gas contain water in the form of steam, and the water in the form of steam is discharged from the fuel cell 2 to the water condenser 5 together with the exhaust fuel gas and the exhaust oxidizing gas. The water is condensed by the water condenser 5, and is then recovered by the water recovery device 6. The water supply device 13 supplies part or all of the recovered water to the reformer 7 as reforming water.

The exhaust oxidizing gas discharged from the fuel cell 2 is discharged to the outside of the system. The exhaust fuel gas is supplied to the combustor 15. The combustible gases contained in the exhaust fuel gas are combusted with combustion air, and the reformer 7 is heated by the resulting combustion heat.

### (Control Relating to Supply Amount of Raw Material Gas)

As described above, in the operations of the fuel cell system 100, the supply amount of the raw material gas is controlled to be the first predetermined amount such that the hydrogen-containing gas in the second predetermined amount, which contains the hydrogen consumption amount to be consumed by the fuel cell 2, is generated, i.e., such that the temperature of the reformer 7 becomes the first predetermined temperature. However, in a case where the electric power generated by the fuel cell 2 varies, the hydrogen consumption amount changes in accordance with the generated electric power. Accordingly, it is necessary to control the supply amount of the raw material gas in accordance with the change in the hydrogen consumption amount. Therefore, the supply amount of the raw material gas (the first predetermined amount) is set not only based on the composition of the raw material gas (the second ratio) but also based on the hydrogen consumption amount. Hereinafter, the manner of control of the supply amount of the raw material gas is described. In the description below, a state where no invading gas is contained in the raw material gas, i.e., a state where the raw material gas in the first predetermined amount is supplied such that the temperature detected by the temperature detector 7a (the temperature of the reformer 7) becomes the first predetermined temperature, is described.

Specifically, as described above, the amount of hydrogen generated by the reformer 7 can be calculated from the supply amount of the raw material gas, the carbon number n in the raw material gas, and the proportion of the raw material gas that undergoes the reforming reaction. Here, the amount of hydrogen generated by the reformer 7 is set based on the hydrogen consumption amount, and the carbon number n in the raw material gas can be calculated from the second ratio. The proportion of the raw material gas that undergoes the reforming reaction depends on the temperature of the reformer 7. Here, the temperature of the reformer 7 is set to the first predetermined temperature as a temperature for generating the hydrogen-containing gas in the second predetermined amount. Accordingly, the first predetermined amount, which is the supply amount of the raw material gas necessary for causing the temperature of the reformer 7 to become the first predetermined temperature, is correlated with the hydrogen consumption amount and the second ratio, and the correlation is stored in the storage unit.

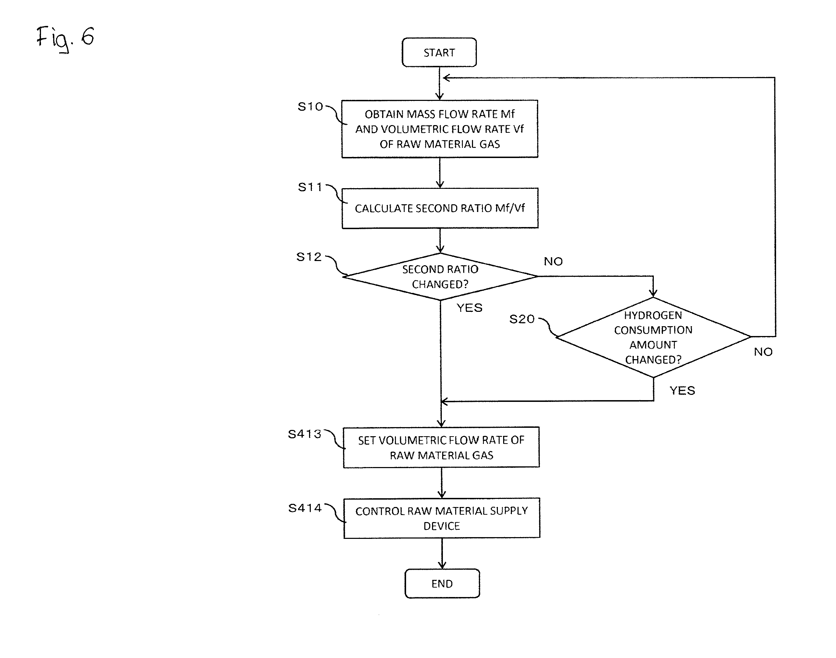

Fig. 6 is a flowchart showing one example where the controller 17 controls the raw material supply device 12. As shown in Fig. 6, the controller 17 obtains the mass flow rate and the volumetric flow rate of the raw material gas (step S10), and calculates the second ratio (step S11). If the second ratio has changed (step S12: YES), or if the hydrogen consumption amount has changed (step S12: NO, step S20: YES), then the controller 17 calculates the first predetermined amount from the second ratio and the hydrogen consumption amount based on the correlation regarding the first predetermined amount (step S413), and controls the raw material supply device 12 so as to supply the raw material gas in the first predetermined amount (step S414).

Thus, since the supply amount of the raw material gas is based on the second ratio and the hydrogen consumption amount, even if the composition of the raw material gas has changed, or electric power to be generated by the fuel cell 2 has varied, a necessary amount of hydrogen for the electric power generation by the fuel cell 2 can be supplied to the fuel cell 2. Therefore, the amount of hydrogen supplied to the fuel cell 2 is prevented from becoming less than the necessary amount of hydrogen for the electric power generation by the fuel cell 2, and a situation where the power generation performance of the fuel cell 2 degrades, which further leads to stopping of the electric power generation, can be prevented.

### (Control Relating to Each Supply Amount)

As described above, in the operations of the fuel cell system 100, the reforming water, the oxidizing gas, and the combustion air are supplied from the water supply device 13, the oxidizing gas supply device 14, and the combustion air supply device 16, respectively. Hereinafter, the manner of control of these supply amounts is described. In the description below, a state where no invading gas is contained in the raw material gas, i.e., a state where the raw material gas in the first predetermined amount is supplied such that the temperature detected by the temperature detector 7a (the temperature of the reformer 7) becomes the first predetermined temperature, is described.

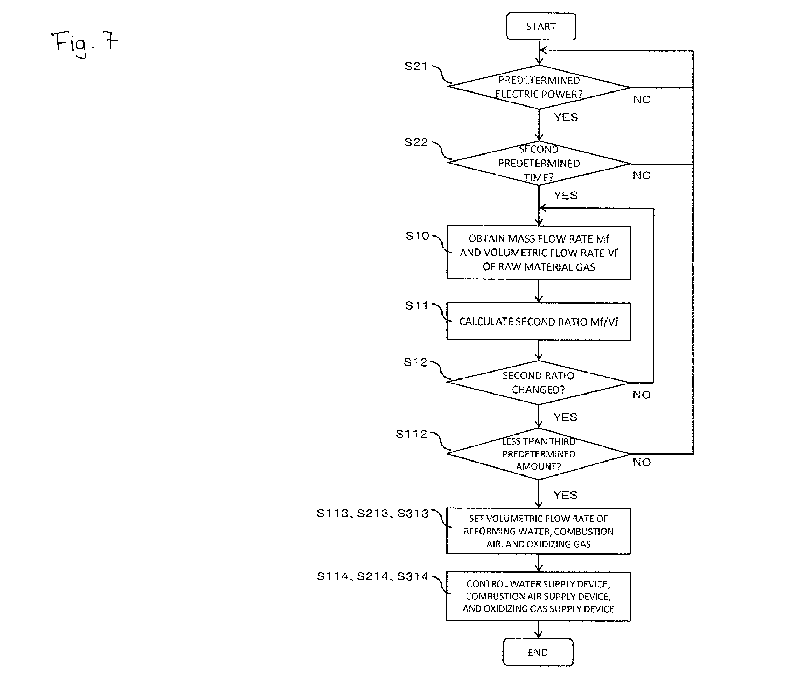

To be specific, Fig. 7 is a flowchart showing one example where the controller 17 controls the water supply device 13, the combustion air supply device 16, and the oxidizing gas supply device 14. As shown in Fig. 7, in a case where the raw material gas in the first predetermined amount is supplied to the reformer 7 such that the temperature of the reformer 7 becomes the first predetermined temperature, the hydrogen-containing gas in the second predetermined amount is generated. When the hydrogen-containing gas in the second predetermined amount is supplied to the fuel cell 2, the fuel cell 2 generates predetermined electric power corresponding to the hydrogen-containing gas in the second predetermined amount (step S21: YES). When a second predetermined time has elapsed in this power generation step (step S22: YES), the controller 17 determines that the electric power generation in the fuel cell system 100 has become stabilized.

In this stable power-generating state, the controller 17 obtains the mass flow rate and the volumetric flow rate of the raw material gas (step S10), and calculates the second ratio (step S11). If the second ratio has changed (step S12: YES) and the change is less than a third predetermined amount (step S 112: YES), the controller 17 sets the theoretical air requirement Ao corresponding to the composition of the raw material gas based on the relationship between the second ratio and the theoretical air requirement Ao (step S 113), and controls the combustion air supply device 16 such that the third ratio (air ratio) A/Ao becomes higher than or equal to the second setting value (step S 114). Further, the controller 17 calculates the volumetric flow rate Vw of the reforming water from the second ratio based on the correlation between the second ratio and the volumetric flow rate Vw (step S213), and controls the water supply device 13 such that the volumetric flow rate Vw becomes the calculated volumetric flow rate (step S214). Still further, the controller 17 calculates the volumetric flow rate of the oxidizing gas based on the correlation between the second ratio and the volumetric flow rate of the oxidizing gas (step S313), and controls the oxidizing gas supply device 14 such that the volumetric flow rate of the oxidizing gas becomes the calculated volumetric flow rate (step S314).

If the change in the second ratio in step S 112 is greater than or equal to the third predetermined amount (step S 112: NO), the controller 17 determines that the composition of the raw material gas has changed to a great degree. As a result, the amount of hydrogen-containing gas generated by the reformer 7 changes, and the supply amount of hydrogen to the fuel cell 2 changes. Consequently, the generated electric power varies. The change in the composition of the raw material gas causes the following changes: a change in the combustion heat of the raw material gas in the combustor 15; a change in the temperature of the reformer 7; and a change in the amount of hydrogen-containing gas generated by the reformer 7. Therefore, in order to temporarily stabilize the power-generating reaction, the controller 17 performs control to supply the raw material gas in the first predetermined amount so as to heat the reformer 7 to the first predetermined temperature, and returns to the process of step S20. Then, if the generation amount of the hydrogen-containing gas has become constant at a second setting amount, and the electric power generated by the fuel cell 2 has become constant at the predetermined electric power (step S21: YES), the controller 17 performs the process of step S22 and the processes of the steps thereafter.

As described above, even if the second ratio has changed by an amount greater than or equal to the third predetermined amount due to a change in the composition of the raw material gas, the electric power generated by the fuel cell 2 is temporarily controlled to be the predetermined electric power, and the predetermined electric power is kept generated for the second predetermined time or longer. In this stable power-generating state, the supply amount of each of the reforming water, the combustion air, and the oxidizing gas is controlled based on the second ratio, and thereby the reforming water, the combustion air, and the oxidizing gas in amounts corresponding to the composition of the raw material gas can be supplied precisely. This makes it possible to prevent a situation that arises when excessive steam is supplied to the fuel cell 2, i.e., a situation where gas diffusion in the fuel cell 2 is hindered, causing a problem of flooding or the like, resulting in degradation in the efficiency of the fuel cell 2, which further leads to stopping of the electric power generation. Moreover, the following situation can also be prevented: a situation where the hydrogen-containing gas in which carbon monoxide remains is supplied to the fuel cell 2, and the carbon monoxide causes degradation in catalytic activity, resulting in degradation in the durability and power generation efficiency of the fuel cell 2. Furthermore, the following situation can be suppressed: a situation where the generation amount of the hydrogen-containing gas decreases, and thereby the efficiency of the fuel cell 2 degrades.

### (Variation 1)

In the above-described Embodiments 1 and 2, the controller 17 controls both the volumetric flow rate of the combustion air supplied by the combustion air supply device 16 and the volumetric flow rate of the oxidizing gas supplied by the oxidizing gas supply device 14 based on the second ratio. However, as an alternative, the controller 17 may control one of the volumetric flow rate of the combustion air and the volumetric flow rate of the oxidizing gas based on the second ratio.

### (Variation 2)

In the above-described Embodiment 1, when the supply amount of the raw material gas after a first predetermined time has elapsed since the amount of hydrogen-containing gas generated by the reformer 7 has become the second predetermined amount is the first predetermined amount, the controller 17 may control the volumetric flow rate of the combustion air and the volumetric flow rate of the oxidizing gas based on the second ratio. In this case, after the first predetermined time has elapsed since the generation amount of the hydrogen-containing gas has become the second predetermined amount, it can be determined that the hydrogen generation apparatus 1 is stably generating the hydrogen-containing gas. In this stable state, factors other than a change in the composition of the raw material gas, such as instability in the temperature of the reformer 7, are eliminated. This makes it possible to precisely control the volumetric flow rates of the combustion air and the oxidizing gas based on a change in the composition of the raw material gas.

### (Variation 3)

In the above-described Embodiments 1 and 2, when the second ratio has changed, the controller 17 controls the volumetric flow rate of the reforming water based on the second ratio, the first setting value, and the volumetric flow rate of the raw material gas. However, as an alternative, when the second ratio has changed, the controller 17 may control the volumetric flow rate of the raw material gas based on the second ratio, the first setting value, and the volumetric flow rate of the reforming water. In this case, the volumetric flow rate Vf of the raw material gas is calculated from the volumetric flow rate Vw of the reforming water such that the first ratio becomes the first setting value, i.e., such that Vw/(n·Vt) = 3.0.

### (Variation 4)

In the above-described Embodiment 2, instead of the power generation step or in addition to the power generation step, in a start-up step before the fuel cell 2 generates the predetermined electric power, when the supply amount of the raw material gas after the first predetermined time has elapsed since the generation amount of the hydrogen-containing gas has become the second predetermined amount is the first predetermined amount, the controller 17 may control the supply amount of each of the reforming water, the combustion air, and the oxidizing gas based on the second ratio.

As described above, when the generation amount of the hydrogen-containing gas remains the second predetermined amount for the first predetermined time or longer, it means that the temperature of, for example, the reformer 7 and each of the supply amounts are stable. If the supply amount of the raw material gas at the time is the first predetermined amount, it means that the raw material gas contains no invading gas. This makes it possible to precisely detect a change in the composition of the raw material gas based on the second ratio, and precisely control the supply amount of each of the reforming water, the combustion air, and the oxidizing gas in accordance with the change in the composition. As a result, when the operation has proceeded from the start-up step to the power generation step, the hydrogen-containing gas in the second predetermined amount is stably supplied to the fuel cell 2. This makes it possible to prevent a situation where the power generation efficiency of the fuel cell 2 degrades and the electric power generation stops.

### (Other Variations)

In the above-described Embodiments 1 and 2, the controller 17 controls the supply amount of the raw material gas supplied by the raw material supply device 12, the supply amount of the reforming water supplied by the water supply device 13, the supply amount of the combustion air supplied by the combustion air supply device 16, and the supply amount of the oxidizing gas supplied by the oxidizing gas supply device 14, based on a volumetric flow rate. However, as an alternative, the controller 17 may control the supply amount of the raw material gas supplied by the raw material supply device 12, the supply amount of the reforming water supplied by the water supply device 13, the supply amount of the combustion air supplied by the combustion air supply device 16, and the supply amount of the oxidizing gas supplied by the oxidizing gas supply device 14, based on a mass flow rate.

Further, the controller 17 may perform, in every predetermined period, the process of each step shown in Fig. 3, Fig. 4, Fig. 6, and Fig. 7 in the above-described Embodiments 1 and 2. However, the controller 17 may suitably perform the process of each step in accordance with an actual change in the composition of the raw material gas. In this case, if the change in the composition of the raw material gas is small, or if no change has occurred in the composition of the raw material gas, then it is not always necessary for the controller 17 to perform the process of each step in every predetermined period. For example, processes up until the process of determining whether or not the second ratio is different from a predetermined value are performed by the controller 17 at predetermined timings or in every predetermined period during operation. Then, only when the second ratio is different from the predetermined value, the controller 17 performs the following processes.

Although Embodiment 2 has described the fuel cell system including the fuel cell 2 connected to the hydrogen generation apparatus 1, the hydrogen generation apparatus 1 is applicable not only to fuel cell systems but also to other systems.

### Industrial Applicability

The hydrogen generation apparatus and the fuel cell system according to the present invention are useful, for example, as a hydrogen generation apparatus and a fuel cell system with improved efficiency and durability.

### Reference Signs List

- 1: hydrogen generation apparatus
- 2: fuel cell
- 4: hydrogen consumption amount calculator
- 7: reformer
- 9: selective oxidizer (oxidizer)
- 10: mass flowmeter
- 11: volumetric flowmeter
- 12: raw material supply device
- 13: water supply device
- 14: oxidizing gas supply device
- 15: combustor
- 16: combustion air supply device
- 17: controller
- 100: fuel cell system

## Claims

1. A hydrogen generation apparatus comprising:
a reformer configured to generate a hydrogen-containing gas though a reforming reaction between a raw material gas and reforming water;
a raw material supply device configured to supply the raw material gas;
a mass flowmeter configured to measure a mass flow rate of the raw material gas;
a volumetric flowmeter configured to measure a volumetric flow rate of the raw material gas;
a water supply device configured to supply the reforming water;
a combustor configured to combust at least one of combustible gases with air to heat the reformer, the combustible gases being the raw material gas and the hydrogen-containing gas;
a combustion air supply device configured to supply the air;
an oxidizer configured to oxidize carbon monoxide in the hydrogen-containing gas with an oxidizing gas;
an oxidizing gas supply device configured to supply the oxidizing gas; and
a controller, wherein
the controller is configured to control at least one of a supply amount of the air supplied by the combustion air supply device and a supply amount of the oxidizing gas supplied by the oxidizing gas supply device based on a second ratio, which is a ratio of the mass flow rate of the raw material gas to the volumetric flow rate of the raw material gas.

2. The hydrogen generation apparatus according to claim 1, further comprising a temperature detector configured to detect a temperature of the reformer, wherein
the controller is configured such that,
in a case where a supply amount of the raw material gas while the raw material supply device is being controlled such that the temperature detected by the temperature detector becomes a first predetermined temperature is a first predetermined amount,
the controller controls at least one of the supply amount of the air and the supply amount of the oxidizing gas based on the second ratio.

3. The hydrogen generation apparatus according to claim 2, wherein
the controller is configured such that,
when the supply amount of the raw material gas after a first predetermined time has elapsed since a generation amount of the hydrogen-containing gas has become a second predetermined amount is the first predetermined amount,
the controller changes at least one of the supply amount of the air and the supply amount of the oxidizing gas based on the second ratio.

4. The hydrogen generation apparatus accordingly any one of claims 1 to 3, wherein
the controller is configured such that,
when the second ratio has changed,
the controller changes one of a supply amount of the raw material gas supplied by the raw material supply device and a supply amount of the reforming water supplied by the water supply device based on the other one of the supply amount of the raw material gas and the supply amount of the reforming water.

5. A fuel cell system comprising:
the hydrogen generation apparatus according to any one of claims 1 to 4; and
a fuel cell configured to generate electric power by using the hydrogen-containing gas.

6. The fuel cell system according to claim 5, further comprising a temperature detector configured to detect a temperature of the reformer, wherein
the controller is configured such that,
in a case where a supply amount of the raw material gas while the raw material supply device is being controlled such that the temperature detected by the temperature detector becomes a first predetermined temperature is a first predetermined amount,
in a start-up step before the fuel cell generates predetermined electric power, when the supply amount of the raw material gas after a first predetermined time has elapsed since a generation amount of the hydrogen-containing gas has become a second predetermined amount is the first predetermined amount,
the controller controls at least one of the supply amount of the air and the supply amount of the oxidizing gas based on the second ratio.

7. The fuel cell system according to claim 5 or 6, further comprising a temperature detector configured to detect a temperature of the reformer, wherein
the controller is configured such that,
in a case where a supply amount of the raw material gas while the raw material supply device is being controlled such that the temperature detected by the temperature detector becomes a first predetermined temperature is a first predetermined amount,
in a power generation step in which the fuel cell generates predetermined electric power, when the supply amount of the raw material gas after a second predetermined time has elapsed is the first predetermined amount,
the controller controls at least one of the supply amount of the air and the supply amount of the oxidizing gas based on the second ratio.

8. The fuel cell system according to claim 7, wherein
the controller is configured such that,
when the second ratio has changed by an amount greater than or equal to a third predetermined amount, the controller controls the generated electric power to be the predetermined electric power, and
when the supply amount of the raw material gas after the second predetermined time has elapsed since the generated electric power has become the predetermined electric power is the first predetermined amount,
the controller controls at least one of the supply amount of the air and the supply amount of the oxidizing gas based on the second ratio.

9. The fuel cell system according to any one of claims 5 to 8, further comprising:
a temperature detector configured to detect a temperature of the reformer; and
a hydrogen consumption amount calculator configured to calculate an amount of hydrogen to be consumed by the fuel cell, wherein
the controller is configured such that,
in a case where a supply amount of the raw material gas while the raw material supply device is being controlled such that the temperature detected by the temperature detector becomes a first predetermined temperature is a first predetermined amount,
the controller changes the first predetermined amount based on the amount of hydrogen and the second ratio.

10. A method of operating a hydrogen generation apparatus, comprising:
generating, by a reformer, a hydrogen-containing gas through a reforming reaction between a raw material gas and water;
combusting, by a combustor, at least one of the raw material gas and the hydrogen-containing gas with air to heat the reformer;
causing, by an oxidizer, carbon monoxide in the hydrogen-containing gas to react with an oxidizing gas to remove the carbon monoxide from the hydrogen-containing gas; and
controlling at least one of a supply amount of the air to the combustor and a supply amount of the oxidizing gas to the oxidizer based on a second ratio, which is a ratio of a mass flow rate of the raw material gas to a volumetric flow rate of the raw material gas.
